# EUROPÄISCHE PATENTANMELDUNG

(11) **EP 1 038 651 A2**
(43) Veröffentlichungstag der Anmeldung: **27.09.2000**
(21) Anmeldenummer: 00102525.3
(22) Anmeldetag: 07.02.2000
(51) Int. Cl.: B29C 47/00

(54) **Flachlege- und Abzugsvorrichtung für eine im Blasverfahren hergestellte Kunststoffschlauchfolienbachn**

(30) Priorität: 18.03.1999 DE 19912209
(71) Anmelder: Windmöller & Hölscher, D-49525 Lengerich (DE)
(72) Erfinder: Krause, Ulrich, 49536 Lienen (DE)

(57) **Zusammenfassung**

Eine Flachlege- und Abzugsvorrichtung für eine im Blasverfahren von einem ortsfest angeordneten Folienblaskopf hergestellte Kunststoff-Schlauchfolienbahn (1) weist Flachlegeplatten (2) und Abquetschwalzen (11,12) auf, die reversierend um die Achse des zugeführten Folienschlauches (1) schwenkbar sind. Die flachgelegte Schlauchfolienbahn (1) wird von den Abquetschwalzen (11,12) über eine ortsfeste Umlenkwalze (13), eine äußere Umlenkwalze und eine innere Wendestange (14) zu einer Aufwickelvorrichtung geführt. Die Wendestange (14) besteht aus einem Rohr, das auf seinem von der Schlauchfolienbahn (1) umschlungenen Mantelbereich mit Bohrungen versehen und das an ein Gebläse angeschlossen ist. Um die Schlauchfolienbahn (1) im wesentlichen mit gleicher Luftschmierung über die Wendestange (14) abzuziehen, ist eine Steuerung oder Regelung in der Weise vorgesehen, daß unabhängig von der Größe des von der Schlauchfolienbahn (1) überdeckten und mit Bohrungen versehenen Mantelbereichs der Wendestange die Blasluft aus den überdeckten Bohrungen mit etwa gleichem Druck austritt.

## Beschreibung

Die Erfindung betrifft ein Flachlege- und Abzugsvorrichtung für eine im Blasverfahren von einem ortsfest angeordneten Folienblaskopf hergestellte Kunststoffschlauchfolienbahn, deren Flachlegeplatten und Abquetschwalzen reversierend um die Achse des zugeführten Folienschlauches schwenkbar sind, wobei die Schlauchfolienbahn zwischen den reversierenden Flachlegeplatten und Abquetschwalzen einerseits und einer ortsfesten Umlenkwalze andererseits über eine äußere Umlenkwalze und eine innere Wendestange, die in zu der Schwenkebene der Abquetschwalzen parallelen Ebenen schwenkbar gelagert sind, geführt wird und wobei die Wendestange aus einem Rohr besteht, das auf seinem von der Schlauchfolienbahn umschlungenen Mantelbereich mit zum Rohrinneren führenden Bohrungen versehen ist und das an ein Gebläse angeschlossen ist.

Eine Flachlege- und Abzugsvorrichtung dieser Art ist beispielsweise aus DE 21 56 079 C2 bekannt. Beim Abzug der Schlauchfolienbahn über die Wendestange befindet sich die Quermittelebene der Wendestange immer auf der Winkelhalbierenden zwischen dem auflaufenden und dem ablaufenden Trum der Schlauchfolienbahn. Die Schlauchfolienbahn nimmt bei ihrem Abzug über die Wendestange also Winkel ein, die zwischen 90° und einem spitzen Winkel, im Ausführungsbeispiel nach der DE 21 56 079 C2 etwa 30°, liegen. Aus dieser Winkellage der Schlauchfolienbahn zu der Wendestange ergibt sich, daß der Überdeckungsgrad der Schlauchfolienbahn bei rechtwinkeligem Abzug über die Wendestange am kleinsten und bei einem Schrägabzug am größten ist. In Abhängigkeit von dem Überdeckungsgrad der Schlauchfolienbahn schwankt bei der bekannten Flachlege- und Abzugsvorrichtung jedoch der Luftdruck in der Wendestange, da einmal von der Schlauchfolienbahn nur ein relativ kleiner Mantelbereich und zum anderen ein relativ großer Mantelbereich abgedeckt ist. Da bei der bekannten Vorrichtung der Wendestange durch das Gebläse immer nur eine konstante Menge von Blasluft zugeführt wird, ist der Luftdruck bei kleinster Überdeckung zu klein, so daß es zu einer unerwünschten die Reibung erhöhenden Berührung der Schlauchfolienbahn mit der Wendestange kommen kann, während bei der größten Überdeckung, also Schrägabzug, der Luftdruck so stark zunehmen kann, daß die Schlauchfolienbahn in unerwünschter Weise auf der Wendestange gleichsam schwimmt.

Aufgabe der Erfindung ist es daher, die bekannte Vorrichtung derart zu verbessern, daß die Schlauchfolienbahn immer mit im wesentlichen gleicher Luftschmierung über die Wendestange abgezogen wird.

Erfindungsgemäß wird diese Aufgabe dadurch gelöst, daß eine Steuerung oder Regelung in der Weise vorgesehen ist, daß unabhängig von der Größe des von der Schlauchfolienbahn überdeckten und mit Bohrungen versehenen Mantelbereichs die Blasluft aus den überdeckten Bohrungen mit etwa gleichem Druck austritt.

Durch die erfindungsgemäße Vorrichtung ist gewährleistet, daß unabhängig von dem Winkel, mit dem die Schlauchfolienbahn über die Wendestange hinweg abgezogen wird, diese immer auf einem im wesentlichen gleichbleibenden Luftpolster gleitet und somit mit im wesentlichen gleicher Luftschmierung geführt ist, so daß sowohl eine reibende Berührung der Wendestange als auch ein Schwimmen der Schlauchfolienbahn auf der Wendestange vermieden sind.

Es kann eine Steuerung vorgesehen sein, die die Blasluftzufuhr entsprechend der jeweiligen Schwenkwinkellage der Wendestange steuert. Eine derartige Steuerung läßt sich mit relativ einfachen Mitteln, beispielsweise Schieber- oder Klappensteuerungen, verwirklichen.

Nach einer anderen Ausführungsform der Erfindung sind eine Regeleinrichtung und eine den Luftdruck in der Wendestange messende Meßeinrichtung vorgesehen, wobei die Regeleinrichtung aufgrund der Signale der Meßeinrichtung den Luftdruck in der Wendestange unabhängig von deren Schwenkwinkel auf einem im wesentlichen konstanten Wert hält.

Ein Ausführungsbeispiel der Erfindung wird nachstehend anhand der Zeichnung näher erläutert. In dieser zeigt
- Fig. 1: eine schematisch vereinfachte Seitenansicht der Reversiervorrichtung in ihrer Grundstellung und
- Fig. 2 und 3: vereinfachte Draufsichten auf die Lage der Umlenkmittel in der Grundstellung (Fig. 2) und bei größter Auslenkung (Fig. 3).

Ein von einer nicht dargestellten Strangpresse mit Folienblaskopf ausgeformter Folienschlauch 1 wird von Flachlegeplatten 2 flachgelegt, die an einem Hilfsgestell 3 befestigt sind, welches wiederum über eine Traverse 4 und eine Tragachse 5 in einem Hauptgestell 6 drehbar gelagert ist. Das Hauptgestell 6 ist beispielsweise mit Ständern 7 auf einer Abzugsbühne 8 mit einer Durchlaßöffnung 9 aufgestellt. Die Drehung der Flachlegevorrichtung, 2, 3, 4, 5 erfolgt mittel eines schematisch angedeuteten Getriebemotors 10, wobei die Umsteuerung nach jeweils z.B. 270° Drehwinkel beispielsweise durch elektrische ortsfeste Endschalter vorgenommen werden kann.

Die flachgelegte Folie wird S-förmig um Abzugs- und Abquetschwalzen 11 und 12 zur Seite umgelenkt und einer gleichsinnig mitreversierenden Umlenkwalze 13 zugeleitet, die mittels eines Halters 13' an dem Hilfsgestell 3 befestigt ist. Es hat sich gezeigt, daß durch die S-förmige Umschlingung der Walzen 11, 12 ein völlig ausreichendes Abquetschen des Folienschlauches erfolgt, so daß keine Luft aus dem Folienschlauch 1 entweichen kann.

Auf der Tragachse 5 seitlich und schwenkbar gelagert folgen eine Wendestange 14 mit ihrer Halterung 15 und Lagerhülse 16. Alle diese Umlenkelemente sind tangential zu gedachten Kreisen um die Mittelachse der Tragachse 5 angeordnet. Der Wendestange 14 folgt ein ortsfestes Vorzugswalzenpaar 23, 24 und diesem ein nicht dargestellter Wickler nach.

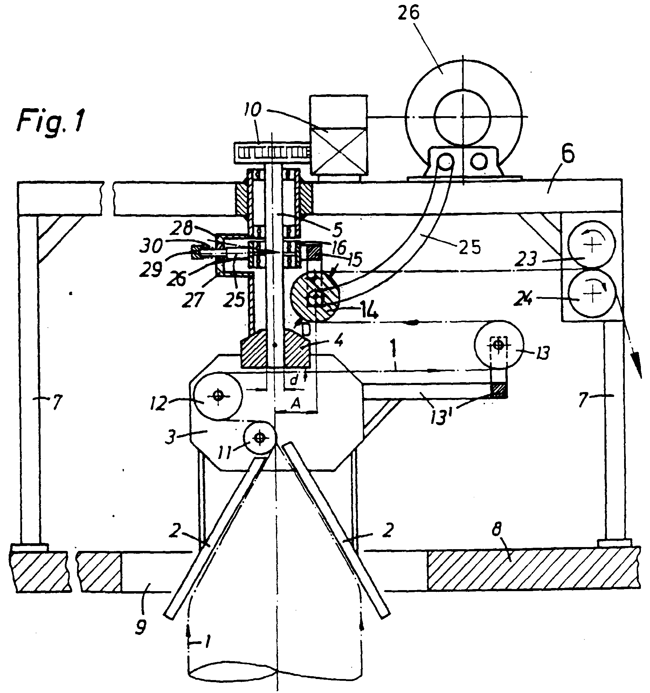

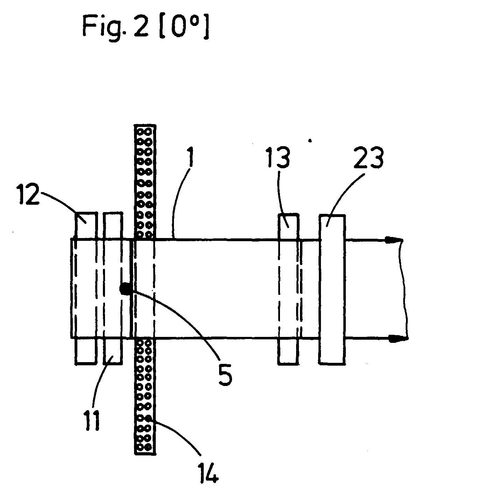

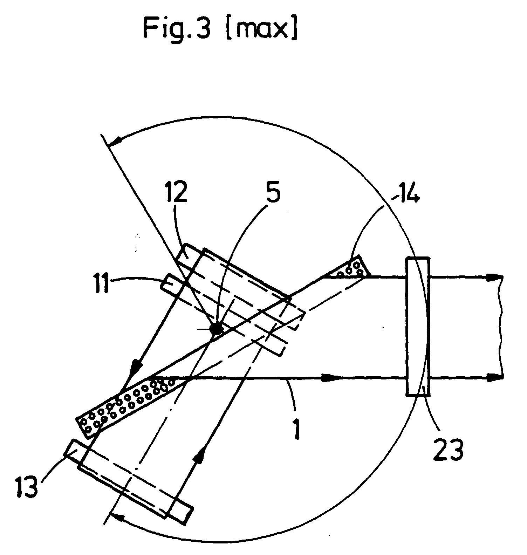

Wie in den Fig. 2 und 3 verdeutlicht, wird die Wendestange 14 immer in die "winkelhalbierende Stellung" von auflaufendem und ablaufendem Trum gestellt und bewirkt so die Umleitung der Bahn, die auf einem Winkelbereich von etwa 270° zugeführt wird, in eine einheitliche Richtung. Die Wendestange kann frei beweglich sein und sich selbst ständig aufgrund des Bahnzuges in die richtige Stellung stellen, oder sie ist wie in Fig. 1 dargestellt zwangsgeführt.

Die Schwenkachse für die Wendestange 14 muß immer (auch bei weniger als 180° Umschlingung der Wendestange) in dem im Grundriß ersichtlichen Schnittpunkt der Folienmittenachse des auf die Wendestange auflaufenden und des von ihr ablaufenden Trumes liegen, da sonst ein seitliches Verlaufen der Folienbahn während des Ausschwenkens des Systems eintreten würde.

Da sich die Wendestange bei ihrer Schwenkbewegung um den Schnittpunkt der Folienmittenachse bewegt, ergibt sich bei dem Schwenken des Systems praktisch keine Veränderung der Folienlaufstrecke, wodurch die besonders vorteilhafte und ortsfeste Aufstellung des Vorzugswalzenpaares an der Ablaufseite der Vorrichtung und damit die feste Installation der zugehörigen Strom- und Steuerleitung ermöglicht wird. Die kleinen Längendifferenzen zwischen der geraden und schrägen Umschlingung der Wendestangen fallen praktisch nicht ins Gewicht.

Die als Rohr ausgebildete Wendestange ist auf der umschlungenen Umfangshälfte mit zum Rohrinnern führenden Löchern versehen und das Rohrinnere ist an ein Gebläse angeschlossen, so daß die Bahn auf einem Luftkissen über die Wendestange hinweggleitet.

Soweit entspricht die erfindungsgemäße Vorrichtung der aus DE 21 56 079 C2 bekannten Flachlege- und Abzugsvorrichtung, auf die zur weiteren Beschreibung Bezug genommen wird.

Die als Rohr ausgebildete Wendestange 14 ist auf einer Seite geschlossen und an die andere Seite ist der die Druckluft von dem Gebläse 26 zuführende Schlauch 25 angeschlossen. Statt des Verschlusses einer Seite der aus einem Rohr bestehenden Wendestange 14 könnten auch beide Seiten der Wendestange mit Anschlüssen für die Druckluftzufuhr versehen sein.

Die unterschiedlichen Überdeckungsgrade der Wendestange 14 durch die Schlauchbahn 1 während des Verschwenkens der Wendestange 14 sind aus den Fig. 2 und 3 ersichtlich, von denen die Fig. 2 den kleinsten Überdeckungsgrad und die Fig. 3 den größten Überdeckungsgrad zeigt.

Entsprechend dem Schwenkwinkel der Wendestange 14 bzw. dem aufgrund der unterschiedlichen Überdeckungsgrade schwankenden Innendruck der Blasluft wird die Blasluftzufuhr in einer Weise gesteuert oder geregelt, daß die von der Schlauchfolienbahn 1 überdeckten Bohrungen immer mit Blasluft von einem im wesentlichen gleichen Druck beaufschlagt sind.

## Patentansprüche

1. Flachlege- und Abzugsvorrichtung für eine im Blasverfahren von einem ortsfest angeordneten Folienblaskopf hergestellte Kunststoff-Schlauchfolienbahn, deren Flachlegeplatten und Abquetschwalzen reversierend um die Achse des zugeführten Folienschlauches schwenkbar sind, wobei die Schlauchfolienbahn zwischen den reversierenden Flachlegeplatten und Abquetschwalzen einerseits und einer ortsfesten Umlenkwalze (23, 24) andererseits über eine äußere Umlenkwalze (13) und eine innere Wendestange (14), die in zu der Schwenkebene der Abquetschwalzen 11, 12 parallelen Ebenen schwenkbar gelagert sind, geführt wird, und wobei die Wendestange (14) aus einem Rohr besteht, das auf seinem von der Schlauchfolienbahn (1) umschlungenen Mantelbereich mit zum Rohrinnern führenden Bohrungen versehen ist und das an ein Gebläse (26) angeschlossen ist,
dadurch gekennzeichnet,
daß eine Steuerung oder Regelung in der Weise vorgesehen ist, daß unabhängig von der Größe des von der Schlauchfolienbahn (1) überdeckten und mit Bohrungen versehenen Mantelbereichs der Wendestange (14) die Blasluft aus den überdeckten Bohrungen mit etwa gleichem Druck austritt.

2. Flachlege- und Abzugsvorrichtung nach Anspruch 1, dadurch gekennzeichnet, daß eine Steuerung vorgesehen ist, die die Blasluftzufuhr entsprechend der jeweiligen Schwenkwinkellage der Wendestange (14) steuert.

3. Flachlege- und Abzugsvorrichtung nach Anspruch 1, dadurch gekennzeichnet, daß eine Regeleinrichtung und eine den Luftdruck in der Wendestange (14) messende Meßeinrichtung vorgesehen sind und daß die Regeleinrichtung aufgrund der Signale der Meßeinrichtung den Luftdruck in der Wendestange (14) unabhängig von deren Schwenkwinkel auf einen im wesentlichen konstanten Wert hält.
